Europäisches Patentamt

European Patent Office

Office européen des brevets

(11) Numéro de publication : **0 504 030 A1**

(12) # DEMANDE DE BREVET EUROPEEN

(21) Numéro de dépôt : **92400602.6**

(22) Date de dépôt : **09.03.92**

(51) Int. Cl.⁵ : **C01G 25/00, C01G 29/00**

(30) Priorité : **12.03.91 FR 9102941**

(43) Date de publication de la demande :
**16.09.92 Bulletin 92/38**

(84) Etats contractants désignés :
**AT BE CH DE DK ES FR GB GR IT LI LU NL PT SE**

(71) Demandeur : **RHONE-POULENC CHIMIE**
**25, quai Paul Doumer**
**F-92408 Courbevoie Cédex (FR)**

(72) Inventeur : **Fourre, Patrick**
**27, I, rue du Bourbonnais**
**F-69009 Lyon (FR)**
Inventeur : **Ries, Michel**
**5, Allée des Noyers**
**F-94400 Vitry Sur Seine (FR)**

(74) Mandataire : **Dubruc, Philippe et al**
**RHONE-POULENC CHIMIE Service**
**IOM/BREVETS, 25,quai Paul Doumer**
**F-92408 Courbevoie (FR)**

(54) **Procédé de préparation d'un titano-zirconate de cation divalent ou trivalent.**

(57)    L'invention concerne un procédé de préparation d'un titano-zirconate d'au moins un cation divalent ou trivalent.

Ce procédé est caractérisé en ce qu'on fait réagir au moins un sel ou hydroxyde dudit cation en milieu basique avec de l'oxyde de zirconium hydraté et un sol d'oxyde de titane de structure anatase obtenu par un procédé comprenant une thermohydrolyse.

Le produit obtenu se présente sous forme de particules de taille moyenne d'au plus 0,5μm et monodisperses.

EP 0 504 030 A1

La présente invention concerne un procédé de préparation d'un titano-zirconate de cation divalent ou trivalent.

Elle concerne plus particulièrement la préparation de titano-zirconates alcalino-terreux comme par exemple le titanozirconate de baryum.

Ces titano-zirconates sont utilisés dans des applications électroniques pour la fabrication notamment de condensateurs ou de résistances.

Pour cette utilisation, il est nécessaire que ces produits présentent en particulier une grande pureté, une bonne frittabilité, une taille de grain faible et monodisperse. Si ces conditions ne sont pas réunies, les produits n'ont pas notamment de bonnes propriétés diélectriques et sont par conséquent inaptes aux applications mentionnées plus haut.

Plusieurs procédés de préparation de titano-zirconates ont déjà été proposés.

D'une manière conventionnelle, on procède par chamottage, c'est-à-dire en faisant réagir entre elles des poudres de $TiO_2$, de $ZrO_2$ et, par exemple, d'un sel de baryum, à haute température. Mais un tel procédé n'est pas satisfaisant car on obtient des produits d'une taille élevée et d'une répartition granulométrique très large en raison de la formation d'agrégats difficiles à réduire au broyage. En outre, un broyage poussé est également source d'impuretés qui peuvent nuire aux propriétés diélectriques du matériau.

Par ailleurs, à cause de la mauvaise homogénéité chimique initiale des produits de départ, il est difficile d'obtenir un contrôle précis de la stoechiométrie, ce qui a pour conséquence la présence de phases parasites. Il s'ensuit notamment des températures de frittage élevées et un mauvais contrôle de la taille des grains du titano-zirconate.

Un premier objet de l'invention est en conséquence un procédé de préparation d'un titano-zirconate permettant l'obtention d'un produit à particules de taille faible, notamment submicronique, et monodisperse.

Un second objet est un procédé permettant d'obtenir, sans calcination ultérieure et à basse température, une solution solide de titano-zirconate.

Un troisième objet de l'invention est enfin un procédé de mise en oeuvre simple et, en particulier, permettant de travailler à concentration élevée en réactifs.

Dans ce but, le procédé, selon l'invention, de préparation d'un titano-zirconate d'au moins un cation divalent ou trivalent est caractérisé en ce qu'on fait réagir au moins un sel ou hydroxyde dudit cation en milieu basique avec un sol d'oxyde de titane de structure anatase, obtenu par un procédé comprenant une thermohydrolyse et de l'oxyde de zirconium.

Le procédé de l'invention permet notamment l'obtention de poudres très fines, c'est-à-dire de taille d'au plus 0,5μm. Ces poudres sont constituées de particules généralement sphériques, à répartition granulométrique resserrée, par exemple ∅ 75 / ∅ 25 ≦ 1,5, non poreuses et facilement dispersibles.

D'autres caractéristiques, détails et avantages de l'invention apparaîtront plus clairement à la lecture de la description et des exemples non limitatifs qui vont suivre.

On notera tout d'abord que l'invention s'applique à la préparation d'un titano-zirconate d'au moins un cation divalent ou trivalent, c'est-à-dire d'un titano-zirconate pouvant contenir dans sa formule un ou plusieurs cations divalents ou trivalents, comme par exemple les mixtes titano-zirconate de baryum et de strontium. En conséquence pour tout le reste de la description, tout ce qui est dit pour un cation divalent ou trivalent doit s'entendre comme pouvant s'appliquer à plusieurs cations.

En ce qui concerne les cations divalents, on peut citer le plomb et ceux du groupe des alcalino-terreux. Parmi ces derniers, on peut mentionner plus particulièrement le baryum et le strontium.

Les cations trivalents envisageables sont par exemple ceux du groupe des terres rares comme l'yttrium, le lanthane et les éléments de la série du lanthane comme le praséodyme et le néodyme. On peut aussi mentionner comme cations trivalents le bismuth.

Les cations divalents ou trivalents peuvent d'abord être utilisés sous forme de sels.

Il peut s'agir de sels inorganiques tels que chlorures, nitrates.

On peut aussi utiliser les sels organiques tels que les acétates, citrates, oxalates, tartrates.

Les cations divalents ou trivalents sont aussi employés sous la forme d'hydroxydes.

Selon l'une des caractéristiques principales de l'invention, le cation divalent ou trivalent réagit avec un sol d'oxyde de titane de structure anatase obtenu par un procédé comprenant une thermohydrolyse et de l'oxyde de zirconium.

On entend ici par sol, une dispersion colloïdale de particules d'oxyde de titane de 10 à 200 nm de diamètre, ces particules peuvent elles-mêmes être constituées de cristallites de 5 à 7 nm environ.

Il doit par ailleurs s'agir d'oxyde de titane sous forme essentiellement anatase.

D'autre part, le sol de titane doit avoir été obtenu par un procédé qui comprend une thermohydrolyse.

Par thermohydrolyse, on entend l'opération consistant à chauffer un sel de titane en solution. On notera ici qu'il est tout à fait possible d'utiliser un sol obtenu par un procédé plus complexe, c'est-à-dire comprenant, outre la thermohydrolyse, d'autres étapes par exemple des post-traitements du sol obtenu.

En outre, il est préférable d'utiliser un sol d'oxyde de titane qui n'a pas été calciné.

Il est aussi avantageux d'utiliser un oxyde de titane exempt de soufre.

On utilise enfin de préférence un sol aqueux d'oxyde de titane.

Selon une variante particulière de l'invention, un sol du type ci-dessus peut être obtenu par thermohydrolyse d'un composé du titane dans un milieu spécifique. Ce composé sera appelé par la suite composé A.

Généralement, le composé A est choisi parmi les halogénures, oxyhalogénures, nitrates ou alcoxydes de titane.

Le milieu réactionnel où se déroule la thermohydrolyse est caractérisé en ce qu'il contient au moins un composé (composé B) choisi parmi :

(i) les acides qui présentent :
    – soit un groupement carboxyle et au moins deux groupements hydroxyles et/ou amines
    – soit au moins deux groupements carboxyles et au moins un groupement hydroxyle et/ou amine

(ii) les sels des acides cités sous (i).

Ce procédé d'obtention du sol de titane va être décrit plus en détail ci-dessous.

La première étape de ce procédé passe donc tout d'abord par la préparation d'une solution contenant au moins un composé A et au moins un composé B tels que précédemment définis.

Cette solution initiale, destinée à être hydrolysée, est de préférence totalement aqueuse; éventuellement il pourrait y être rajouté un autre solvant, un alcool par exemple, à condition bien entendu que les composés A et B utilisés soient alors substantiellement solubles dans ce mélange.

D'autre part, il est préférable que le composé du titane A soit exempt de soufre, ce qui dans ce cas exclut l'utilisation de sels du type sulfate ou oxysulfate de titane.

De préférence, on opèrera avec des composés du titane du type halogénure ou oxyhalogénure de titane. Les halogénures ou les oxyhalogénures de titane plus particulièrement utilisables sont les fluorures, les chlorures, les bromures et les iodures (respectivement les oxyfluorures, les oxychlorures, les oxybromures et les oxyiodures) de titane.

On peut utiliser tout particulièrement l'oxychlorure de titane $TiOCl_2$.

Selon le procédé, la solution initale doit en outre contenir au moins un composé B tel que défini précédemment, c'est-à-dire un composé B convenablement choisi dans la classe générale des acides (hydroxy et/ou amino) carboxyliques.

A titre d'exemples non limitatifs de composés B rentrant dans le cadre de la présente invention, on peut citer notamment :
    – les acides hydroxypolycarboxyliques, et plus particulièrement les acides hydroxydi- ou hydroxytricarboxyliques, comme par exemple l'acide malique, l'acide citrique et l'acide tartronique,
    – les acides (polyhydroxy)monocarboxyliques, comme par exemple l'acide glucoheptonique et l'acide gluconique,
    – les acides poly(hydroxycarboxyliques), comme par exemple l'acide tartrique,
    – les aminoacides dicarboxyliques et leurs amides correspondants, comme par exemple l'acide aspartique, l'asparagine et l'acide glutamique,
    – les aminoacides monocarboxyliques, hydroxylés ou non, comme par exemple la lysine, la sérine et la thréonine.

Comme déjà indiqué, il est également possible d'utiliser à titre de composé B tous les sels des acides précités.

De préférence, ces sels seront soit des sels d'alcalins, et plus particulièrement des sels de sodium, soit des sels d'ammonium.

De préférence, les composés B tels que notamment définis ci-dessus seront des composés hydrocarbonés du type aliphatique.

De préférence enfin, la longueur de la chaîne principale hydrocarbonée n'excèdera pas 15 atomes de carbone, et plus préférentiellement 10 atomes de carbone.

La quantité de composé du titane présente dans la solution à hydrolyser est généralement telle que la concentration molaire en titane dans ladite solution soit comprise entre environ 0,1 mole/litre et 1,5 mole/litre.

Des concentrations en titane inférieures à 0,1 mole/litre nuisent simplement à l'économie et à la rentabilité du procédé.

Des concentrations en titane supérieures à 1,5 mole/litre peuvent nuire au rendement de la réaction d'hydrolyse.

Pour des concentrations en titane aux environs de, ou supérieures à 1,5 mole/litre, il peut être alors avantageux de rajouter dans la solution de l'ammoniaque $NH_4OH$ dans un rapport molaire $\dfrac{[NH_3]}{[Ti]}$ n'excèdant pas de préférence 1,5, et ceci dans le but d'augmenter le rendement et/ou la cinétique de la réaction d'hydrolyse.

La concentration en composé B dans la solution initiale peut être comprise entre 0,002 mole/litre et 0,5 mole/litre. D'une manière générale, on constate que des concentrations relativement faibles en composé B, c'est-à-dire des concentrations comprises entre 0,002 mole/litre et 0,1 mole/litre, suffisent à obtenir le résultat recherché.

On peut se mettre plus particulièrement dans des conditions telles que le rapport molaire B/Ti soit d'au moins 1,5% plus particulièrement d'au moins 2%.

On notera enfin que selon un mode de réalisation particulier de l'invention, la solution initiale peut éventuellement contenir en outre des germes d'anatase. La quantité de germes peut varier entre 0,1 et 2% en poids, par rapport au $TiO_2$ total. La présence de ces germes permet d'accélérer la vitesse d'hydrolyse et de mieux contrôler la taille des particules du sol.

La solution initiale ainsi obtenue est alors hydrolysée.

Cette hydrolyse est de préférence menée à une température supérieure ou égale à 60°C. Des températures inférieures peuvent bien entendu être utilisées, mais dans ce cas la réaction d'hydrolyse est beaucoup plus longue, ce qui nuit évidemment à l'économie du procédé.

A l'issue de la réaction, on récupère le solide formé, notamment par filtration.

Le solide ainsi récupéré peut alors être lavé, à l'eau par exemple, pour éliminer les éventuelles impuretés restantes, puis séché.

L'analyse par diffraction X montre que le produit ainsi obtenu est de l'oxyde de titane $TiO_2$ présent essentiellement ou uniquement sous sa forme cristalline anatase.

Ainsi qu'il a été dit auparavant, la réaction selon l'invention du cation divalent ou trivalent avec l'oxyde de titane est effectuée en présence d'oxyde de zirconium. Il est à noter que ce terme désigne aussi les dérivés hydratés et/ou hydroxylés de celui-ci.

L'oxyde de zirconium est utilisé de préférence à l'état amorphe ou faiblement cristallisé.

Plus particulièrement, l'oxyde précité est mis en oeuvre dans le procédé selon l'invention, sous la forme d'un gel hydraté.

La préparation de ce gel peut être effectuée selon toute méthode connue. Cependant, selon un mode de réalisation particulier de l'invention, on procède à la neutralisation d'une solution d'un sel de zirconium, par une base. Habituellement, la solution précitée est une solution aqueuse.

Tous les sels de zirconium conviennent à la mise en oeuvre de la neutralisation dans la mesure où ils sont solubles dans le milieu réactionnel.

Ainsi, on peut citer les sels d'acides minéraux comme les nitrates ou les chlorures notamment.

On peut aussi nommer les sels d'acides organiques comme par exemple, les formiates, acétates, citrates, tartrates, oxalates.

La base utilisée pour neutraliser la solution du sel de zirconium est indifféremment une base organique ou minérale.

Ainsi, à titre d'exemple de base organique, on peut citer les amines comme la méthylamine, l'éthylamine, les diamines comme notamment l'éthylènediamine, ou encore les sels d'ammonium quaternaires.

En ce qui concerne les bases minérales, la soude, la potasse, l'ammoniaque peuvent être utilisées.

Selon un mode de réalisation préféré, on effectue la neutralisation en présence d'ammoniaque.

La quantité de base utilisée est généralement telle que le pH après la neutralisation soit d'au moins 4, et de préférence voisin de 8.

La concentration de la base n'a pas de caractère critique. Le choix de celle-ci est fait en fonction du taux de dilution du mélange après neutralisation et de la facilité de manipulation de la base. Généralement, la concentration de la base varie entre 1 et 10 M et plus particulièrement entre 1 et 5 M.

La mise en contact de la solution du sel de zirconium et de la base peut être effectuée indifféremment en introduisant la solution précitée dans la base ou inversement.

Le cas de l'introduction simultanée des réactifs est de même possible.

Habituellement, le milieu réactionnel est maintenu sous agitation durant la neutralisation.

La réaction de neutralisation est effectuée à une température inférieure à 100°C, et plus particulièrement à une température comprise entre 20 et 40°C.

Le milieu réactionnel peut être ensuite laissé sous agitation de quelques minutes à plusieurs heures.

Cependant, avantageusement, on peut séparer le gel de zirconium dès la fin de l'introduction des réactifs selon toute méthode connue, comme par exemple la centrifugation.

Après séparation, le gel peut être éventuellement lavé, en effectuant par exemple une ou plusieurs étapes de lavage-centrifugation. Habituellement, on lave le gel à l'eau.

Généralement l'oxyde de zirconium n'est pas séché afin d'éviter tout risque de cristallisation importante du gel. Bien entendu, on ne sortirait pas du cadre de la présente invention en séchant le gel obtenu. Dans un tel cas, le séchage est effectué de préférence à une température comprise entre 20 et 50°C.

L'analyse par diffraction des rayons X de l'oxyde de zirconium résultant indique que celui-ci se présente sous la forme d'un gel amorphe ou faiblement cristallisé.

Le gel, séché ou non, est habituellement redispersé dans l'eau avant d'être mis en oeuvre dans le procédé selon l'invention.

Comme on l'a vu plus haut, le procédé de l'invention comprend la réaction d'au moins un cation divalent ou trivalent avec un sol de titane et un oxyde de zirconium, tels que décrits précédemment, ou du type obtenus par les procédés qui viennent d'être étudiés ci-dessus.

Cette réaction se fait généralement à une température d'au moins 70°C plus particulièrement d'au moins 100°C.

Habituellement, on ne dépasse pas la température de 300°C.

On peut ainsi travailler entre 100 et 250°C, par exemple et plus particulièrement entre 150 et 250°C.

Il peut être nécessaire, pour les températures supérieures à 100°C d'effectuer la réaction dans un autoclave.

On notera ici qu'un des avantages du procédé de l'invention est de travailler à des températures relativement basses.

Par ailleurs, la réaction est faite dans un milieu basique, voire très basique.

Ainsi le milieu réactionnel doit être à un pH d'au moins 10, de préférence d'au moins 12, et plus particulièrement d'au moins 13,5.

Si nécessaire, pour atteindre les valeurs de pH souhaitées, on peut ajouter au milieu réactionnel une base minérale ou organique telle que des hydroxydes alcalins ou alcalino-terreux comme NaOH ou KOH, des sels ou hydrates d'ammonium quaternaire ou des amines.

Par ailleurs, on peut effectuer la réaction dans un milieu présentant une concentration en titane comprise entre 0,1 et 1 mole de titane par kg de milieu réactionnel.

La concentration en zirconium dans ce milieu peut être comprise entre 0,1 et 1 mole par kg de milieu réactionnel.

La concentration en cation divalent ou trivalent dans ce même milieu peut être comprise entre 0,2 et 2 mole par kg de milieu réactionnel.

On notera qu'il s'agit là de concentrations en réactifs élevées par rapport à celles utilisées dans l'art antérieur.

Enfin, il est préférable de travailler dans une atmosphère inerte, exempte de $CO_2$ tel que sous azote ou argon.

Le procédé est mis en oeuvre avec un ordre d'introduction des réactifs et d'une manière quelconque. Puis on porte le mélange ainsi obtenu à la température nécessaire. Le mélange est généralement agité.

On maintient ensuite le mélange à la température pendant une durée comprise entre environ 1 et 70 heures. Habituellement, la durée de la réaction varie entre 12 et 24 heures.

A l'issue de la réaction, on obtient une poudre qui est filtrée et, si nécessaire, lavée par exemple avec une solution tamponnée à pH 4,8, puis enfin séchée à une température modérée par exemple à une température comprise entre l'ambiante et 50°C, ou par un procédé de type atomisation.

D'une manière générale, le procédé de l'invention permet d'obtenir un produit constitué de particules généralement sphériques de taille d'au plus 0,5μm, en particulier égale ou inférieure à 0,1μm et pouvant descendre jusqu'à 0,05μm.

Ces particules ont une répartition granulométrique très étroite par exemple $\varnothing 75 / \varnothing 25 \leqq 1,5$ et plus particulièrement $\leqq 1,4$.

Leur surface spécifique mesurée par BET varie entre 1 et 25 m²/g.

Ces particules ne présentent pas ou peu de porosité. Elles sont très facilement dispersibles. Leur taux de cristallisation est supérieur à 95%.

Par ailleurs, le procédé selon l'invention permet d'obtenir une large gamme de produits de haute pureté, par un simple ajustement de la stoechiométrie des réactifs.

En outre, les produits formés correspondent à des solutions solides de titanate et de zirconate. En effet, les produits selon l'invention présentent une variation linéaire de la distance inter-réticulaire du réseau cristallographique, en fonction du coefficient stoechiométrique du titane ou du zirconium (loi de Végard).

Le procédé selon l'invention permet des économies importantes sur l'ensemble du procédé d'élaboration du matériau puisque les produits sont obtenus sans calcination ultérieure.

Un mode de réalisation particulier de l'invention peut être envisagé.

Celui-ci permet d'obtenir des produits dont la taille se situe dans la partie haute de la gamme donnée ci-dessus, à savoir entre 0,1 et 0,5μm.

Selon cette variante, on effectue la réaction en deux étapes.

La première étape est conduite dans des conditions telles que le rapport molaire cation divalent ou trivalent/(Ti + Zr) soit inférieur à 1 et de préférence d'au plus 0,5, par exemple compris entre 0,2 et 0,5. Puis dans une deuxième étape, on rajoute la quantité nécessaire complémentaire de cation divalent ou trivalent.

Il est préférable dans le cas de cette variante d'effectuer les deux étapes à des températures différentes. On travaille à une température basse dans la première étape et à une température plus élevée dans la seconde.

Par exemple la première étape peut se dérouler à une température de l'ordre de 70 à 150°C, la dernière étape pouvant avoir lieu entre 100 et 300°C.

Il est aussi possible de prévoir une étape intermédiaire entre la première et la dernière, de façon que la montée en température soit plus progressive ; cette étape intermédiaire se déroulant alors à une température comprise entre celles des deux autres.

On procède ensuite pour la récupération de la poudre de la même manière que celle décrite plus haut.

Des exemples concrets vont maintenant être donnés.

## EXEMPLE 1

On prépare un sol d'oxyde de titane (à 16% de $TiO_2$) de structure anatase par le procédé suivant :

A un litre de solution d'oxychlorure de titane contenant une mole de Ti, on ajoute 0,02 mole d'acide citrique. On ajoute également à cette solution des germes d'anatase à raison de 2% en poids par rapport au $TiO_2$ total. L'ensemble est porté à ébullition et y est maintenu pendant 6 heures. A la fin de la réaction, ce sol se présente sous la forme de particules de 30 nm de diamètre constituées de cristallites de 7 nm.

On prépare un gel d'oxyde de zirconium (à 9,4% de $ZrO_2$) par le procédé suivant :

On dissout dans l'eau 100 g de nitrate de zirconyle puis on introduit de l'ammoniaque (5 M) jusqu'à obtenir un pH de 8,5.

Durant l'introduction, le milieu est maintenu à une température inférieure à 40°C et sous agitation.

Le gel est ensuite séparé par centrifugation puis lavé à l'eau avant d'être redispersé dans l'eau.

L'analyse RX du gel d'oxyde de zirconium indique que celui-ci est amorphe.

On fait ensuite réagir 29,3 g de sol d'anatase et 83,7 g d'oxyde de zirconium amorphe, tels que la concentration en titane soit de 0,085 mole/kg et le rapport molaire Ti/Zr égal à 1, dans un autoclave pendant 24 heures à 200°C sous agitation (1000 t.mn$^{-1}$) avec de l'hydroxyde de baryum (0,17 mole/kg) en milieu alcalin ($OH^-$ : 2 moles/kg). L'analyse du titano-zirconate de baryum indique un produit de formule $BaZr_{0,5}Ti_{0,5}O_3$ de forme cristalline cubique.

Le paramètre de maille déterminé par diffraction des rayons x vaut 4,10 Å. La morphologie des particules est sphérique et non poreuse. Leur taille moyenne, déterminée par analyse d'images de microscopie électronique est de 0,065 μm avec un rapport ⌀ 75 / ⌀ 25 égal à 1,32. La surface spécifique de la poudre, mesurée à l'azote, est de 13 m²/g.

Exemple 2 : $Ba Zr_{0,8} Ti_{0,2} O_3$

On fait réagir 11,7 g de sol d'anatase et 134 g d'oxyde de zirconium amorphe, obtenus selon l'exemple 1 tels que la concentration en titane soit de 0,034 mole/kg et le rapport molaire Ti/Zr égal à 0,25, dans un autoclave pendant 24 heures à 200°C sous agitation (1000 t.mn$^{-1}$) avec de l'hydroxyde de baryum (0,17 mole/kg) en milieu alcalin ($OH^-$ : 2 moles/kg). L'analyse du titano-zirconate de baryum indique un produit de formule $BaZr_{0,8}Ti_{0,2}O_3$ de forme cristalline cubique.

Le paramètre de maille déterminé par diffraction des rayons x vaut 4,16 Å. La morphologie des particules est sphérique et non poreuse. Leur taille moyenne, déterminée par analyse d'images de microscopie électronique est de 0,060 μm avec ⌀ 75 / ⌀ 25 égal à 1,40. La surface spécifique de la poudre mesurée à l'azote est de 16,5 m²/g.

**Revendications**

1 - Procédé de préparation d'un titano-zirconate d'au moins un cation divalent, ou trivalent caractérisé en ce qu'on fait réagir au moins un sel ou hydroxyde dudit cation en milieu basique avec un sol d'oxyde de titane de structure anatase, obtenu par un procédé comprenant une thermohydrolyse, et de l'oxyde de zirconium.

2 - Procédé selon la revendication 1, caractérisé en ce que l'oxyde de zirconium est amorphe ou faiblement cristallisé.

3 - Procédé selon l'une des revendications précédentes, caractérisé en ce qu'on choisit le cation divalent dans le groupe des cations alcalino-terreux.

4 - Procédé selon la revendication 3, caractérisé en ce que le cation est le baryum ou le strontium.

5 - Procédé selon l'une des revendications précédentes, caractérisé en ce qu'on choisit le cation trivalent dans le groupe comprenant le bismuth, l'yttrium et les terres rares.

6 - Procédé selon l'une des revendications précédentes, caractérisé en ce que le sol précité est le produit d'une thermohydrolyse d'un composé A du titane dans un milieu comprenant au moins un composé B choisi parmi :

(i) les acides qui présentent :
    – soit un groupement carboxyle et au moins deux groupements hydroxyles et/ou amines
    – soit au moins deux groupements carboxyles et au moins un groupement hydroxyle et/ou amine

(ii) les sels des acides cités sous (i).

7 - Procédé selon la revendication 6, caractérisé en ce que le composé A est un halogénure, un oxyhalogénure, un nitrate ou un alcoxyde de titane.

8 - Procédé selon l'une des revendications précédentes, caractérisé en ce qu'on effectue la réaction précitée à une température d'au moins 70°C plus particulièrement comprise entre 100 et 250°C.

9 - Procédé selon la revendication 8, caractérisé en ce qu'on effectue la réaction précitée à une température comprise entre 150 et 250°C.

10 - Procédé selon l'une des revendications précédentes, caractérisé en ce qu'on effectue la réaction précitée dans un milieu à pH d'au moins 10, de préférence d'au moins 12, plus particulièrement d'au moins 13,5.

11 - Procédé selon l'une des revendications précédentes, caractérisé en ce qu'on effectue la réaction précitée dans un milieu comprenant une base.

12 - Procédé selon l'une des revendications précédentes, caractérisé en ce que l'on effectue la réaction précitée dans un milieu présentant une concentration en Ti comprise entre 0,1 et 1 M/kg.

13 - Procédé selon l'une des revendications précédentes, caractérisé en ce que l'on effectue la réaction précitée dans un milieu présentant une concentration en zirconium comprise entre 0,1 et 1 M/kg.

14 - Procédé selon l'une des revendications précédentes, caractérisé en ce que l'on effectue la réaction précitée dans un milieu présentant une concentration en cation divalent ou trivalent comprise entre 0,2 et 2 M/kg.

**15 -** Procédé selon l'une des revendications précédentes, caractérisé en ce qu'on effectue la réaction précitée en au moins deux étapes à des températures différentes, la température étant plus élevée dans la dernière étape.

Office européen
des brevets

# RAPPORT DE RECHERCHE EUROPEENNE

Numero de la demande

EP    92 40 0602

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | EP-A-0 163 739 (SONY CORPORATION)<br><br>* page 13 - page 15 *<br>--- | 1,3,4,<br>8-11 | C01G25/00<br>C01G29/00 |
| X | EP-A-0 335 773 (RHONE-POULENC CHIMIE)<br>* revendications 1-15 *<br>--- | 6,7 | |
| A | EP-A-0 324 619 (DU PONT DE NEMOURS)<br>--- | | |
| A | EP-A-0 187 383 (SONY CORPORATION)<br>* revendications 1-6 *<br>--- | 1,5 | |
| A | WORLD PATENTS INDEX<br>Week 1377, 1 Mai 1976<br>Derwent Publications Ltd., London, GB;<br>AN 77-23146Y<br>& SU-A-509 553 (LIMAR)<br>* abrégé *<br>--- | 1 | |
| P,A | EP-A-0 448 441 (RHONE-POULENC CHIMIE)<br><br>* revendications 1-15 *<br><br>----- | 1-12,13,<br>15 | **DOMAINES TECHNIQUES RECHERCHES (Int. Cl.5)**<br><br>C01G |

Le présent rapport a été établi pour toutes les revendications

| Lieu de la recherche | Date d'achèvement de la recherche | Examinateur |
|---|---|---|
| LA HAYE | 18 JUIN 1992 | LIBBERECHT-VERBEECK |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)